# EUROPEAN PATENT SPECIFICATION

(11) **EP 3 498 471 B1**
(45) Date of publication and mention of the grant of the patent: **07.10.2020**
(21) Application number: 17207920.4
(22) Date of filing: 18.12.2017
(51) Int. Cl.: B32B 37/06, H01G 4/32, H01G 13/02, B29C 65/04, H01B 17/28, H01B 19/00

(54) **METHOD OF CONSOLIDATING A WOUND BODY**
VERFAHREN ZUR KONSOLIDIERUNG EINES GEWUNDENEN KÖRPERS
PROCÉDÉ DE CONSOLIDATION D'UN CORPS ENROULÉ

(43) Date of publication of application: 19.06.2019
(73) Proprietor: ABB Power Grids Switzerland AG, 5400 Baden (CH)
(72) Inventor: MARTINI, Harald, 722 18 Västerås (SE); SCHIESSLING, Joachim, 749 42 Enköping (SE)
(74) Representative: Valea AB

(56) References cited:
- EP-A2- 2 399 717
- GB-A- 635 549
- US-A1- 2012 227 901
- US-A1- 2015 325 341
- US-B2- 9 505 168

## Description

### TECHNICAL FIELD

The present disclosure relates to a method and a system for consolidating a body formed by wound layers of a thermoplastic film.

### BACKGROUND

Dry-type high-voltage (HV) bushings may be made from a film of a thermoplastic material, with interleaved metal foil, which is wound onto a metal pipe to form a condenser body around the pipe.

US2015325341 relates to the conventional way of producing a condenser core of a bushing by heating and pressing a film being wound. A potential problem may occur if the film is stretched unintentionally by being heated before it is pressed onto the previously wound film layer.

The thermoplastic material has to be heated to its softening, thermoforming or melting temperature to be processed. This is normally done indirectly with a hot air oven or with electrically or oil heated moulds. Both methods are very energy consuming since large volumes (air, steel moulds) have to be heated up. Automation is also difficult using these methods. Infra red (IR) heating is another way of heating, but cannot be used directly in a mould. Instead, the heated material has to be carefully transferred to a "thermoforming station". IR heating is useful for thin wall application since the penetration depth of the short wave IR is only a few millimetres. Especially black material absorbs all the energy on the surface and the bulk could only be heated via convection (thermoplastic materials have normally very low heat conductivity). There is also a risk of burning the material on the surface while in the bulk the temperature is still below processing temperature.

For bushings made of thermoplastic thin film, one technology to produce a HV bushing is based on using non-impregnatable film which require a thermal treatment for consolidation during winding. One classical approach is to use heated rolls which warms in first place the film but not the adhesive between both films. The adhesive has to be heated by heat conduction through the films. This limits the number of layers that can be laminated at one time. An alternative is to use radiation heating by IR (works only for thin wall thickness (few mm) or LASER (requires additive to absorb energy). In order to keep tension on the film, the heat can only be applied directly at the gap (contact point) between the winding rolls, which disqualifies heating by radiation.

US 2,458,012 discloses the use of a high-frequency (HF) electrical source for drying a paper insulated condenser bushing during manufacture thereof. EP 2 399 717 discloses the application of HF electrical fields for heating and bending plastic pipes.

GB635549, US9505168 and US2012227901 disclose the use of HF fields for joining plastic materials.

### SUMMARY

It is an objective of the present invention to provide an improved way of heating a thermoplastic material while it is being wound, thereby consolidating the resulting wound body. The wound body may be of any wound electronics component, e.g. for HV applications such as rated for a voltage within the range of 52-1100 kV, such as bushings, e.g. transformer bushings, transformer windings, condensers, cable endings, wound cables or instrument transformers, e.g. of current or voltage instruments.

In accordance with embodiments of the present invention, HF heating can be used to improve the winding/lamination step for a wound body, e.g. of a bushing, made of thermoplastic thin film. By using HF heating, the heat may be confined to a small region at application. For instance, with the technology to produce e.g. a HV bushing based on using non-impregnatable film which require a thermal treatment for consolidation during winding, one or both of two rolls between which the film is laminated can act as HF electrodes, applying the heating at the nip whereby unintentional stretching of the film before being pressed onto the body is avoided.

According to an aspect of the present invention, there is provided a method of consolidating a wound body according to claim 1.

According to another aspect of the present invention, there is provided a winding system for forming a wound body around an elongated member according to claim 7.

By using a HF electrical field for heating and consolidating the wound body, the whole thickness of the body between the first and second electrodes may be heated, substantially uniformly, improving consolidation of the body together with the pressure exerted by the roll forming the nip, while the web of the film is not heated substantially. Direct heating only takes place in the nip between the two electrodes, in a volume of the body defined by the nip and the distance between the electrodes at the nip. Heating by diffusion is typically limited for thermoplastic materials, especially electrically insulating thermoplastic materials which are used in embodiments of the present invention. By the heating being limited to the nip, the web of the film is not heated such that it is deformed by stretching before entering the nip. An used between the wound layers for fastening the layers to each other, the adhesive is softened or melted by the applied heating to bind the layers to each other and thereby consolidating the body.

Further, by using the HF technique a faster heating of the body may be obtained, reducing the processing and overall production time. Thus, a higher winding and/or lamination speed and a higher production throughput may be obtained. The heating is more evenly distributed through the bulk of the wound body, leading to a fast uniform heat distribution, reducing the stress in the body.

In accordance with the present invention, the HF heating is integrated in the winding step of the production of the wound body. Heat is applied directly between the electrodes, comprised in a roll and in the elongated member, without heating the electrodes themselves.

The film tension of the film web during the winding may be kept constant, since the material is heated only in the gap/nip, but stiff when attached to the roll on all the way until the pressure and HF region between the electrodes is reached.

It is to be noted that any feature of any of the aspects may be applied to any other aspect, wherever appropriate. Likewise, any advantage of any of the aspects may apply to any of the other aspects. Other objectives, features and advantages of the enclosed embodiments will be apparent from the following detailed disclosure, from the attached dependent claims as well as from the drawings.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated. The use of "first", "second" etc. for different features/components of the present disclosure are only intended to distinguish the features/components from other similar features/components and not to impart any order or hierarchy to the features/components.

### BRIEF DESCRIPTION OF THE DRAWINGS

Embodiments will be described, by way of example, with reference to the accompanying drawings, in which:
Fig 1 is a schematic illustration of an embodiment of a winding system for winding a thermoplastic film onto a pipe under HF heating, in accordance with the present invention.
Fig 2 is a schematic flow chart of an embodiment of a method of the present invention.

### DETAILED DESCRIPTION

Embodiments will now be described more fully hereinafter with reference to the accompanying drawings, in which certain embodiments are shown. However, other embodiments in many different forms are possible within the scope of the present disclosure as defined by the appended claims. Rather, the following embodiments are provided by way of example so that this disclosure will be thorough and complete, and will fully convey the scope of the disclosure to those skilled in the art. Like numbers refer to like elements throughout the description.

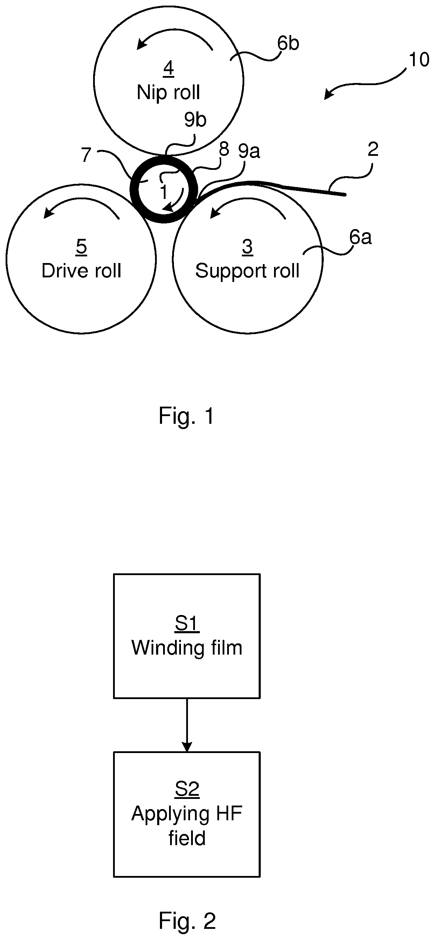

Figure 1 illustrates an embodiment of a winding system 10. For forming a wound body 8 around an elongated member 1. The wound body may e.g. be of any wound electronics component, e.g. for HV applications, such as bushings, e.g. transformer bushings, transformer windings, condensers, cable endings, wound cables or instrument transformers, e.g. of current or voltage instruments. The wound body 8 may thus be used as electrical insulation in such electronic components. In a specific embodiment, the wound body is a condenser body of an electrical bushing, e.g. a HV bushing and/or a transformer bushing. The elongated member 1 may e.g. be a rod or a pipe, typically of an electrically conducting material such as copper, iron/steel or aluminium. If the body 8 is for a bushing, the elongated member 1 may be a pipe forming a though hole for an electrical conductor for which the bushing is used, or the elongated member may form part of such a conductor.

To modify electrical fields formed by the electronics component, foil(s), e.g. of a thickness within the range of 10-15 µm, of an electrically conducting material, e.g. copper or aluminium, may be interleaved between layers of the wound body 8.

The body 8 is wound by a film 2 of a thermoplastic material. A web of the film 2 extends to a nip formed by a support roll 3 by means of which the film is wound around the elongated member 1, forming the body 8 from a plurality of layers of the film. The film may be of any thermoplastic material suitable for forming a flexible film, typically an electrically insulating material. Some examples of thermoplastic materials which may be suitable for different embodiments of the present invention includes Polyethylene Terephthalate (PET), Polyethylene Naphthalate (PEN), Polyethersulfone (PES) and Polyetherimide (PEI). The film may have a thickness within the range of 5-500 µm (micrometres), e.g. 50-100 µm.

In some embodiments of the present invention, the system 10 may comprise further roll(s), e.g. a drive roll 5 for driving the rotation of the elongated member 1, and typically also of the support roll 3 via the body 8 wound around the elongated member 1, as indicated by the curved arrows in the figure and/or a nip roll 4 used for applying pressure to the body 8 in a nip formed where the nip roll 4 engages the body to further consolidate the body. In some embodiments, a separate drive roll 5 may not be needed, but any of the other rolls or the elongated member may be powered to rotate and drive the system 100. Additional roll(s), conventionally used, may also be comprised in the system 10. One of the rolls 3, 4 or 5 is electrically conducting and connected to a voltage to act as the first electrode 6, as called herein, for forming the HF electrical field. For instance, the support roll 3 may form the nip 9a and be or comprise the first electrode 6a, or the nip roll 4 forming the nip 9b may be or comprise the first electrode 6b, as exemplified in the figure.

In the invention, the second electrode 7 is, or is comprised in, the elongated member 1, which is thus of an electrically conducting material such as copper or aluminium. In other examples not part of the invention, the second electrode 7 may be, or be comprised in, one of the rolls 3, 4 or 5 which is in mesh with the body 8, other than any roll comprising the first electrode 6. Thus, some embodiments of the present invention provide a winding system 10 for forming a wound body 8 around an elongated member 1. The winding system comprises a roll 3, 4 or 5 arranged to form a nip 9 in which the web of the film 2 of a thermoplastic material is pressed onto the wound body 8 comprising a plurality of wound layers of the film around said elongated member. The system 10 also comprises a first electrode 6 and a second electrode 7. The first and second electrodes are arranged to apply an HF electrical field at the nip 9 to heat said body at said nip.

In the invention, the first electrode 6 is comprised in the roll 3, 4 or 5.

Additionally, the second electrode 7 is comprised in the elongated member 1.

Additionally or alternatively, in some embodiments, the elongated member, and thus the second electrode 7, is in the form of a metal pipe.

Figure 2 is a schematic flow chart of an embodiment of the method for consolidating a wound body, of the present invention. The film 2 of a thermoplastic material is wound S1 onto the elongated member 1 for forming a wound body 8 comprising a plurality of wound layers of the film around the elongated member. During said winding Si, a HF electrical field formed between the first electrode 6 and the second electrode 7 is applied S2 at the nip 9 where the web of the film, forming a subsequent layer of the body, is pressed onto a previously wound layer of the body, to heat said body at said nip.

In some embodiments, the body 8 at the nip 9 is heated to a temperature which is above the glass transition temperature (T_{g}) but below the melting temperature (Tₘ) of the thermoplastic material. According to the invention, an adhesive is applied between the layers of the film, and the body 8 at the nip 9 is heated to a temperature which is above a softening or melting temperature of the adhesive, but below the melting temperature, Tₘ, of the thermoplastic material. Additionally, the body 8 at the nip 9 may be heated to a temperature within the range of 140-250°C.

In some embodiments, the heating at the nip is local such that the web outside of the nip is not heated such that the web is deformed, e.g. above the T_{g} of the thermoplastic material.

In some embodiments, the wound body is an insulator for an electronic device.

According to the invention, the second electrode 7 is grounded.

In some embodiments, an electrically conducting foil is interleaved between the film layers of the wound body 8.

Some embodiments of the present invention relate to an insulator for an electronic device comprising the wound body produced in accordance with the method of any preceding claim.

Additionally, some embodiments of the present invention relates to an electronic device comprising an embodiment of the insulator, for instance a bushing, e.g. transformer bushing, a transformer winding, a condenser, a cable ending, a wound cable or an instrument transformer, e.g. of a current or voltage instrument, preferably a HV transformer bushing.

The present disclosure has mainly been described above with reference to a few embodiments. However, as is readily appreciated by a person skilled in the art, other embodiments than the ones disclosed above are equally possible within the scope of the present disclosure, as defined by the appended claims.

## Claims

1. A method of consolidating a wound body, the method comprising:
onto an elongated member (1), winding (S1) a film (2) of a thermoplastic material for forming a wound body (8) comprising a plurality of wound layers of the film around said elongated member; and
during said winding, applying (S2) a high-frequency, HF, electrical field formed between a first (6) and a second (7) electrode at a nip (9) where a web of the film is pressed onto a previously wound layer of the body, to heat said body at said nip;
wherein the second electrode (7) is grounded and comprised in the elongated member (1);
wherein the first electrode (6) is comprised in a roll (3/4/5) forming the nip (9); and
wherein an adhesive is applied between the layers of the film, and wherein the body (8) at the nip (9) is heated to a temperature which is above a softening or melting temperature of the adhesive, but below the melting temperature, Tm, of the thermoplastic material.

2. The method of claim 1, wherein the body (8) at the nip (9) is heated to a temperature which is above the glass transition temperature, Tg, but below the melting temperature, Tm, of the thermoplastic material.

3. The method of any preceding claim, wherein the body (8) at the nip (9) is heated to a temperature within the range of 140-250°C.

4. The method of any preceding claim, wherein the heating at the nip is local such that the web outside of the nip is not heated such that the web is deformed, e.g. above the Tg of the thermoplastic material.

5. The method of any preceding claim, wherein the wound body is an insulator for an electronic device.

6. The method of any preceding claim, wherein an electrically conducting foil is interleaved between the film layers of the wound body (8).

7. A winding system (10) for forming a wound body (8) around an elongated member (1), the winding system comprising:
a roll (3/4/5) arranged to form a nip (9) in which a web of a film (2) of a thermoplastic material can be pressed onto a wound body (8) comprising a plurality of wound layers of the film around said elongated member;
a first electrode (6); and
a second electrode (7);
wherein the first and second electrodes are arranged to apply a high-frequency, HF, electrical field at the nip to heat said body at said nip such that the body (8) at the nip (9) can be heated to a temperature which is above a softening or melting temperature of an adhesive applied between the layers of the film, but below the melting temperature, Tm, of the thermoplastic material;
wherein the second electrode (7) is grounded and comprised in the elongated member (1); and
wherein the first electrode (6) is comprised in the roll (3/4/5).

8. The system of claim 7, wherein the second electrode (7) is in the form of a metal pipe of the elongated member (1).

## Patentansprüche

1. Verfahren zum Konsolidieren eines gewickelten Körpers, wobei das Verfahren umfasst:
Wickeln (S1), auf ein lang gestrecktes Element (1), eines Films (2) aus einem thermoplastischen Material zum Bilden eines gewickelten Körpers (8), der eine Vielzahl von gewickelten Schichten des Films um das lang gestreckte Element umfasst; und
während des Wickelns, Anlegen (S2) eines elektrischen Hochfrequenzfeldes, HF-Feldes, das zwischen einer ersten (6) und einer zweiten (7) Elektrode an einem Walzenspalt (9) gebildet wird, wo der Film auf eine zuvor gewickelte Schicht des Körpers gedrückt wird, um den Körper an dem Walzenspalt zu erwärmen;
wobei die zweite Elektrode (7) geerdet ist und in dem lang gestreckten Element (1) enthalten ist;
wobei die erste Elektrode (6) in einer Walze (3/4/5) enthalten ist, welche den Walzenspalt (9) bildet; und
wobei ein Klebstoff zwischen die Schichten des Films appliziert wird, und wobei der Körper (8) an dem Walzenspalt (9) auf eine Temperatur erwärmt wird, die über einer Aufweichungs- oder Schmelztemperatur des Klebstoffs aber unter der Schmelztemperatur, Tm, des thermoplastischen Materials liegt.

2. Verfahren nach Anspruch 1, wobei der Körper (8) an dem Walzenspalt (9) auf eine Temperatur erwärmt wird, die über einer Glasübergangstemperatur, Tg, aber unter der Schmelztemperatur, Tm, des thermoplastischen Materials liegt.

3. Verfahren nach einem der vorhergehenden Ansprüche, wobei der Körper (8) an dem Walzenspalt (9) auf eine Temperatur innerhalb des Bereichs von 140 bis 250°C erwärmt wird.

4. Verfahren nach einem der vorhergehenden Ansprüche, wobei das Erwärmen an dem Walzenspalt lokal erfolgt, sodass die Bahn außerhalb des Walzenspalts nicht so erwärmt wird, z.B. über die Tg des thermoplastischen Materials hinaus, dass die Bahn deformiert wird.

5. Verfahren nach einem der vorhergehenden Ansprüche, wobei der gewickelte Körper ein Isolator für eine elektronische Vorrichtung ist.

6. Verfahren nach einem der vorhergehenden Ansprüche, wobei eine elektrisch leitfähige Folie zwischen die Filmschichten des gewickelten Körpers (8) eingelegt wird.

7. Wickelsystem (10) zum Bilden eines gewickelten Körpers (8) um ein lang gestrecktes Element (1), wobei das Wickelsystem umfasst:
eine Walze (3/4/5), die angeordnet ist, um einen Walzenspalt (9) zu bilden, in dem eine Bahn eines Films (2) aus einem thermoplastischen Material auf einen gewickelten Körper (8) gedrückt werden kann, der eine Vielzahl von gewickelten Schichten des Films um das lang gestreckte Element umfasst;
eine erste Elektrode (6); und
eine zweite Elektrode (7);
wobei die erste und die zweite Elektrode ausgelegt sind, um ein elektrisches Hochfrequenzfeld, HF-Feld, an dem Walzenspalt anzulegen, um den Körper an dem Walzenspalt so zu erwärmen, dass der Körper (8) an dem Walzenspalt (9) auf eine Temperatur erwärmt werden kann, die über einer Aufweichungs- oder Schmelztemperatur eines Klebstoffs, der zwischen die Schichten des Films appliziert wird, aber unter der Schmelztemperatur, Tm, des thermoplastischen Materials liegt;
wobei die zweite Elektrode (7) geerdet ist und in dem lang gestreckten Element (1) enthalten ist; und
wobei die erste Elektrode (6) in der Walze (3/4/5) enthalten ist.

8. System nach Anspruch 7, wobei die zweite Elektrode (7) die Form einer Metallröhre in dem lang gestreckten Element (1) aufweist.

## Revendications

1. Procédé de consolidation d'un corps enroulé, ce procédé comprenant :
sur un élément allongé (1), l'enroulement (S1) d'une feuille mince (2) d'un matériau thermoplastique pour former un corps enroulé (8) comprenant une pluralité de couches enroulées de la feuille mince autour dudit élément allongé ; et
pendant ledit enroulement, l'application (S2) d'un champ électrique à haute fréquence, HF, formé entre une première (6) et une deuxième (7) électrode au niveau d'une zone de pincement (9) où une bande de la feuille mince est pressée sur une couche enroulée antérieurement du corps, pour chauffer ledit corps au niveau de ladite zone de pincement ;
la deuxième électrode (7) étant mise à la terre et comprise dans l'élément allongé (1) ;
la première électrode (6) étant comprise dans un rouleau (3/4/5) formant la zone de pincement (9) ; et
une colle étant appliquée entre les couches de la feuille mince, et le corps (8), au niveau de la zone de pincement (9), étant chauffé à une température qui est au-dessus d'une température de ramollissement ou de fusion de la colle, mais en dessous de la température de fusion, Tm, du matériau thermoplastique.

2. Procédé selon la revendication 1, dans lequel le corps (8), au niveau de la zone de pincement (9), est chauffé à une température qui est au-dessus de la température de transition vitreuse, Tg, mais en dessous de la température de fusion, Tm, du matériau thermoplastique.

3. Procédé selon l'une quelconque des revendications précédentes, dans lequel le corps (8), au niveau de la zone de pincement (9), est chauffé à une température située dans la plage allant de 140°C à 250°C.

4. Procédé selon l'une quelconque des revendications précédentes, dans lequel le chauffage au niveau de la zone de pincement est local de manière à ce que la bande à l'extérieur de la zone de pincement ne soit pas chauffée au point d'être déformée, par exemple au-dessus de la Tg du matériau thermoplastique.

5. Procédé selon l'une quelconque des revendications précédentes, dans lequel le corps enroulé est un isolateur pour un dispositif électronique.

6. Procédé selon l'une quelconque des revendications précédentes, dans lequel un feuil électriquement conducteur est intercalé entre les couches de feuille mince du corps enroulé (8).

7. Système d'enroulement (10) pour former un corps enroulé (8) autour d'un élément allongé (1), ce système d'enroulement comprenant :
un rouleau (3/4/5) disposé de façon à former une zone de pincement (9) dans laquelle une bande d'une feuille mince (2) d'un matériau thermoplastique peut être pressée sur un corps enroulé (8) comportant une pluralité de couches enroulées de la feuille mince autour dudit élément allongé ;
une première électrode (6) ; et
une deuxième électrode (7) ;
la première et la deuxième électrode étant disposées de façon à appliquer un champ électrique à haute fréquence, HF, au niveau de la zone de pincement pour chauffer ledit corps au niveau de ladite zone de pincement de manière à ce que le corps (8) au niveau de la zone de pincement (9) puisse être chauffé à une température qui est au-dessus d'une température de ramollissement ou de fusion d'une colle appliquée entre les couches de la feuille mince, mais en dessous de la température de fusion, Tm, du matériau thermoplastique ;
la deuxième électrode (7) étant mise à la terre et comprise dans l'élément allongé (1) ; et
la première électrode (6) étant comprise dans le rouleau (3/4/5).

8. Système selon la revendication 7, dans lequel la deuxième électrode (7) est sous la forme d'un tuyau métallique de l'élément allongé (1).
